Europäisches Patentamt

European Patent Office

Office européen des brevets

(19)

(11) **EP 1 091 898 B1**

(12) **FASCICULE DE BREVET EUROPEEN**

(45) Date de publication et mention
de la délivrance du brevet:
**14.08.2002 Bulletin 2002/33**

(21) Numéro de dépôt: **99922241.7**

(22) Date de dépôt: **01.06.1999**

(51) Int Cl.⁷: **B65G 53/16**, B65G 53/20,
B65G 53/52

(86) Numéro de dépôt international:
**PCT/FR99/01275**

(87) Numéro de publication internationale:
**WO 99/62800 (09.12.1999 Gazette 1999/49)**

(54) **PROCEDE DE CONVOYAGE EN PHASE HYPERDENSE DE MATERIAUX PULVERULENTS APPLICABLE AU CONTOURNEMENT D'OBSTACLES**

FÖRDERVERFAHREN IN HYPERDICHTE PHASE VON SCHÜTTGUT VERWENDBAR FÜR DIE UMGEHUNG VON HINDERNISSEN

METHOD FOR CONVEYING IN HIGH DENSITY PHASE POWDER MATERIALS APPLICABLE TO OBSTACLE AVOIDANCE

(84) Etats contractants désignés:
**CH DE ES FR GB GR IE IT LI NL SE**

(30) Priorité: **02.06.1998 FR 9807120**

(43) Date de publication de la demande:
**18.04.2001 Bulletin 2001/16**

(73) Titulaire: **ALUMINIUM PECHINEY**
**75218 Paris Cedex 16 (FR)**

(72) Inventeurs:
• **GASQUET, Gérard**
**F-13170 Les Pennes Mirabeau (FR)**
• **CLOUE, Christian**
**Quartier Bompertuis F-13120 Gardanne (FR)**
• **TORSIELLO, Stéphane**
**F-13090 Aix en Provence (FR)**

(74) Mandataire: **Marsolais, Richard**
**Péchiney,**
**Immeuble "SIS"**
**217, cours Lafayette**
**69451 Lyon Cedex 06 (FR)**

(56) Documents cités:
**EP-A- 0 493 279          EP-B- 0 122 925**
**EP-B- 0 179 055          DE-A- 3 407 402**
**US-A- 3 024 071**

## Description

### DOMAINE TECHNIQUE

L'invention concerne un perfectionnement du système de transport et de distribution de matériaux pulvérulents en phase hyperdense. Grâce à ce perfectionnement, il est possible d'équiper les anciennes installations industrielles avec ce système de convoyage performant et économique.

Il s'agit d'un procédé continu de transport de produit pulvérulent permettant d'alimenter, à partir d'une unique zone de stockage, un grand nombre d'ensembles de conditionnement tels que des ensacheuses, des dispositifs de mise en conteneur, ou encore un grand nombre d'ensembles de production tels que des presses extrudeuses de matière plastique ou des cellules de cuves d'électrolyse ignée.

Les matériaux pulvérulents à transporter sont fluidisables: ils ont une granulométrie et une cohésion telles qu'en leur insufflant un gaz à faible vitesse, on provoque une décohésion des particules entre elles et une réduction des forces de frottement interne. De tels matériaux sont, par exemple, l'alumine destinée à l'électrolyse ignée, les ciments, plâtres, la chaux vive ou éteinte, les cendres volantes, le fluorure de calcium, le chlorure de magnésium, toutes charges pour mélanges, les catalyseurs, les poussières de charbon, le sulfate de sodium, les phosphates, polyphosphates ou pyrophosphates, les matériaux plastiques sous forme de poudre, les produits alimentaires tels que le lait en poudre, les farines, etc...

### ETAT DE LA TECHNIQUE

De nombreux dispositifs ont été étudiés et développés pour le transport en lit fluidisé de matériaux pulvérulents. Un problème particulier est lié à l'alimentation en continu du matériau pulvérulent, régulée en fonction des besoins de consommation dudit matériau. Un exemple parmi d'autres illustrant ce problème est relatif à l'alimentation en alumine des cellules d'électrolyse ignée pour la production de l'aluminium.

Pour ce faire, l'alumine, produit pulvérulent transporté et solubilisé dans le bain électrolytique, est progressivement consommée pendant que se déroule l'électrolyse et doit être remplacée au fur et à mesure de sa consommation, de telle manière que la concentration en alumine solubilisée soit maintenue à un niveau optimal, favorable au rendement maximal de la cellule d'électrolyse. Dès lors, il devient nécessaire de régler la quantité d'alumine introduite dans la cuve d'électrolyse, de telle manière que son fonctionnement ne soit pas perturbé par un excès ou par un manque d'alumine.

Le système de transport de matériaux pulvérulents mis au point par la demanderesse et décrit dans les brevets européens EP-B-0 122 925, EP-B-0 179 055, EP-B-0 187 730, EP-B-0 190 082 et EP-B-0 493 279 permet une alimentation en continu de matières solides pulvérulentes en phase hyperdense. Il sert notamment à alimenter en alumine, de façon régulière et continue, les trémies de stockage et de distribution situées dans la superstructure des cuves d'électrolyse.

Ce système comprend, entre la zone de stockage et la zone à alimenter, au moins un convoyeur horizontal, appelé aérocanalisation, constitué par un canal inférieur destiné à la circulation d'un gaz, un canal supérieur destiné à la circulation du matériau pulvérulent, les deux canaux étant séparés par une paroi poreuse. Le canal inférieur est alimenté en gaz par au moins une tubulure d'alimentation. Le matériau pulvérulent remplit complètement le canal supérieur du convoyeur et ce convoyeur est muni d'au moins une colonne d'équilibrage remplie partiellement de matériau pulvérulent, la hauteur de remplissage équilibrant la pression du gaz. La colonne d'équilibrage crée des conditions de fluidisation potentielle du matériau pulvérulent qui, peu remué en raison du très faible débit du gaz, se présente dans l'aérocanalisation sous la forme d'un lit hyperdense.

Pour bien comprendre la fluidisation potentielle, il est utile de rappeler ce qu'est la fluidisation classique, habituellement pratiquée pour le convoyage de matériaux pulvérulents, et décrite par exemple dans le brevet US 4 016 053. Le dispositif employé en fluidisation comporte également une aérocanalisation, telle que celle décrite précédemment. Le gaz de fluidisation est introduit sous une pression donnée $p_f$ dans le canal inférieur, traverse ladite paroi poreuse, puis passe entre les particules au repos du matériau pulvérulent formant la couche à fluidiser. Contrairement au dispositif à fluidisation potentielle, l'épaisseur de cette couche au repos est très inférieure à la hauteur du canal supérieur dudit convoyeur, c'est-à-dire qu'en l'absence de toute injection de gaz de fluidisation, le matériau pulvérulent ne remplit que très partiellement le canal supérieur du convoyeur horizontal.

En fluidisation classique, on impose un débit de gaz important: les particules sont mises en mouvement et soulevées, chacune d'entre elles perdant le contact permanent avec ses voisines. Par ce moyen, l'espace interstitiel existant entre les particules augmente, les frottements internes entre particules sont réduits et ces particules sont mises dans un état de suspension dynamique.

De ce fait, il en résulte une augmentation du volume initial du matériau pulvérulent et, corrélativement, une diminution de la densité apparente.

Le terme de "phase dense" est généralement réservé au transport pneumatique à haute pression. La phase hyperdense est caractéristique de la fluidisation potentielle. Pour fixer les idées, on considère par exemple dans le cas de l'alumine ($Al_2O_3$) que le rapport solide/gaz est de l'ordre de 10 à 150 kg $Al_2O_3$ / kg air dans le transport pneumatique en phase dense et de 750 à 950 kg Al2O3/ kg air pour le transport par fluidisation potentielle en phase hyperdense. La phase hyperdense permet donc de transporter le solide pulvérulent à des concentrations solide/gaz très importantes, nettement plus élevées que la phase dense en transport pneumatique.

Dans le cas de la fluidisation potentielle, même lorsqu'il n'y a pas injection de gaz, le matériau pulvérulent remplit presque complètement le dispositif de convoyage, en particulier le canal supérieur. Lorsque le gaz est introduit dans le canal inférieur, la colonne d'équilibrage se remplit partiellement du matériau pulvérulent occupant le canal supérieur, selon une hauteur manométrique qui équilibre la pression pf et interdit l'accroissement des interstices entre les particules. De ce fait, la présence de la colonne d'équilibrage interdit la fluidisation du matériau pulvérulent présent dans le convoyeur horizontal et oblige ledit matériau à se présenter sous l'aspect d'un lit hyperdense à fluidisation potentielle. En outre, comme la distance interstitielle entre les particules n'augmente pas, la perméabilité du milieu au gaz introduit sous la pression $p_f$ est très faible et limite l'écoulement gazeux à un très petit débit. Nous appellerons par la suite "dégazage" cet écoulement gazeux à faible débit qui traverse la colonne d'équilibrage.

Il n'y a donc pas fluidisation mais on peut bien parler de fluidisation potentielle: s'il n'y a pas circulation permanente du matériau dans l'aérocanalisation, il y a écoulement par éboulements successifs dès que le besoin en matériau pulvérulent se fait sentir, par exemple lorsque le niveau de la zone à alimenter descend en-dessous d'une valeur critique. En effet, lorsque la consommation continue du matériau stocké dans la zone à alimenter est telle que le niveau du matériau baisse et arrive en-dessous de l'orifice de la canalisation d'alimentation, une certaine quantité du matériau pulvérulent s'échappe de la canalisation, en créant un "vide" qui se remplit par un éboulement du matériau, éboulement qui en entraîne un autre en amont et se reproduit ainsi de proche en proche dans l'aérocanalisation en remontant vers le silo de stockage.

Le système à fluidisation potentielle de convoyage en lit hyperdense, tel qu'il est décrit dans les brevets européens EP-B-0 122 925, EP-B-0 179 055, EP-B-0 187 730, EP-B-0 190 082 et EP-B-0 493 279 est exploité à grande échelle, notamment pour alimenter les cuves de 300 000 ampères des installations récentes réalisant l'électrolyse ignée de l'aluminium. Les avantages de ce dispositif sont bien connus:

- une alimentation continue des cuves permettant de maintenir les trémies toujours pleines,
- un faible entretien du système, peu d'usure en raison de la faible vitesse de circulation du produit
- pas de ségrégation granulométrique
- une consommation faible d'énergie
- une maîtrise parfaite du transport de l'alumine, sans envolements préférentiels.

## PROBLEME POSE

Dans un atelier d'électrolyse, le nombre de zones à alimenter à partir d'une seule zone de stockage est important (plusieurs dizaines) et la distance entre la zone de stockage et la zone à alimenter peut être importante (plusieurs centaines de mètres). Le dispositif illustré dans EP-B-0 179 055, est constitué d'une série de convoyeurs en cascade: un convoyeur primaire reliant la zone de stockage à une série de convoyeur secondaires, chacun affecté à une cuve et muni de piquages latéraux alimentant des trémies intégrées à la superstructure de la cuve.

Mais ce système impose l'emploi de convoyeurs horizontaux ou faiblement inclinés, de façon à ce que la succession des petits éboulements - qui se produisent de proche en proche dans l'aérocanalisation et remontent jusqu'au silo de stockage - s'effectue dans les meilleures conditions. La demanderesse a en effet constaté d'une part qu'il n'était pas possible de maintenir le matériau en état de fluidisation potentielle en cas de forte pente du convoyeur et d'autre part qu'une brusque rupture de pente rompait l'effet "domino" des microéboulements et entraînait la formation de bouchons solides, dans lesquels le matériau pulvérulent ne pouvait plus être maintenu en état de fluidisation potentielle.

Or un atelier ancien n'a pas obligatoirement été conçu pour n'être alimenté que par des convoyeurs horizontaux ou faiblement inclinés. Il existe en effet parfois des zones de passage destinées aux véhicules de service de l'électrolyse (transport de bain liquide, de métal, etc...), des obstacles que les convoyeurs ne peuvent pas contourner par la droite ou la gauche mais en changeant obligatoirement de niveau.

La demanderesse a donc cherché à mettre au point un procédé qui permette d'utiliser, même lorsqu'il s'agit de renouveler l'équipement d'installations anciennes, le système de convoyage en phase hyperdense décrit dans les brevets européens EP-B-0 122 925, EP-B-0 179 055, EP-B-0 187 730, EP-B-0 190 082 et EP-B-0 493 279.

## OBJET DE L'INVENTION

Le procédé selon l'invention est un procédé de convoyage de matériaux pulvérulents par fluidisation potentielle, permettant de contourner par changement de niveau les obstacles, c'est-à-dire libérant le système de convoyage en lit hyperdense de la contrainte d'implantation de convoyeurs uniquement horizontaux ou faiblement inclinés. Dans le texte qui suit, par souci de concision, ces convoyeurs seront qualifiés "horizontaux", même s'ils sont faiblement inclinés.

Selon l'invention, on introduit dans le système de convoyeurs en lit hyperdense, au niveau de l'obstacle à franchir, entre deux convoyeurs horizontaux (l'un sera qualifié "amont", l'autre "aval") un dispositif de contournement de l'obstacle, comportant au moins trois caissons:

- à l'entrée du dispositif, un caisson amont comportant un canal inférieur alimenté en gaz à la pression P1 et un canal ou conduit supérieur, constitué essentiellement d'une colonne, reliée d'un côté au canal supérieur du convoyeur amont et de l'autre côté au canal supérieur du caisson intermédiaire;
- au milieu, à un niveau permettant de franchir l'obstacle, au moins un caisson intermédiaire comparable à une aérocanalisation horizontale, dont le canal inférieur est alimenté en gaz à la pression P3 et dont le canal supérieur, relié par sa première extrémité au canal supérieur du caisson amont, est relié par sa deuxième extrémité au canal supérieur du caisson aval;
- à la sortie du dispositif, un caisson aval comportant un canal inférieur alimenté en gaz à la pression P2 et un canal ou conduit supérieur, constitué essentiellement d'une colonne, reliée d'un côté au canal supérieur du caisson intermédiaire et de l'autre côté au canal supérieur du convoyeur aval.

L'obstacle se trouve au niveau de l'un au moins des convoyeurs horizontaux et le caisson intermédiaire se trouve à un niveau différent de celui de l'obstacle, ce qui permet de le contourner. Les convoyeurs horizontaux sont en général au même niveau, mais rien n'interdit une différence de hauteur entre ces deux convoyeurs horizontaux. La longueur du caisson intermédiaire est suffisante pour faire franchir l'obstacle au matériau pulvérulent à convoyer.

La particularité du dispositif est de créer une différence de pression $\Delta P = P1-P2$ toujours strictement positive, le réglage des pressions étant tel que, à tout moment, les trois caissons restent remplis du matériau pulvérulent maintenu en état de fluidisation potentielle. En s'assurant que cette différence de pression reste positive, le dispositif agit comme un siphon hydraulique: on constate que l'écoulement du produit s'effectue librement du premier convoyeur horizontal vers le second, de manière continue et régulière.

De préférence, les colonnes du caisson amont et du caisson aval sont des colonnes d'équilibrage, remplies de produit pulvérulent sur une hauteur telle que le niveau libre dudit matériau dans chacune de ces colonnes se trouve au dessus du point le plus haut des aérocanalisations appartenant au groupe constitué par le caisson intermédiaire et les parties des convoyeurs amont et aval situées au voisinage de leurs jonctions avec le dispositif de contournement. La différence de pression $\Delta P = P1-P2$ toujours positive est assurée quand la hauteur du matériau pulvérulent dans la colonne du caisson amont est supérieure à celle du matériau pulvérulent dans la colonne du caisson aval.

Dans la pratique, le dispositif réalisé selon l'invention et appliqué au transport de l'alumine présente de préférence un caisson intermédiaire situé à un niveau plus bas que celui des deux convoyeurs horizontaux, ce qui permet de faire passer l'alumine sous le plancher des cuves afin de laisser le passage libre aux véhicules de service de l'électrolyse. Mais on pourrait également envisager un passage par le haut ou encore un passage à un niveau intermédiaire. Le tout est de respecter d'une part que le niveau libre de l'alumine dans les deux colonnes est situé au dessus du point le plus haut des deux convoyeurs et du caisson intermédiaire et d'autre part que la hauteur d'alumine dans la première colonne est supérieure à la hauteur d'alumine dans la deuxième colonne.

La pression du caisson intermédiaire sert à mettre le matériau pulvérulent en état de fluidisation potentielle. De préférence, elle a une valeur intermédiaire entre la pression de fluidisation potentielle de la première colonne et celle de la seconde colonne.

Pour que le système fonctionne correctement, il est avantageux de ménager dans la partie sommitale du canal supérieur du caisson intermédiaire un espace libre de matériau pulvérulent, constituant une bulle de gaz sous pression. La demanderesse s'est en effet aperçu que, d'une façon générale, la présence de bulles de gaz dans la partie supérieure des canaux supérieurs des convoyeurs en phase hyperdense favorisait l'établissement de bonnes conditions de fluidisation potentielle en permettant une meilleure circulation au gaz de fluidisation. La demande de brevet français FR 9806124, déposée par la demanderesse le 11 mai 1998, décrit les dispositifs adaptés à la création de bulles stables dans la partie supérieure des canaux supérieurs des convoyeurs. En l'occurrence, il suffit ici de prolonger chaque colonne par une pénétration de part et d'autre de la partie supérieure du canal supérieur du caisson intermédiaire. La hauteur de la pénétration est de préférence comprise entre la moitié et le centième de la hauteur de la partie utile de l'aérocanalisation transportant le matériau pulvérulent.

## MODES DE REALISATION DE L'INVENTION - EXEMPLES

Le procédé selon l'invention sera mieux compris par la description détaillée de différents dispositifs exposés ici à titre d'exemples non limitatifs.

La figure 1 est une vue schématique en coupe verticale d'un premier dispositif selon l'invention, permettant un contournement d'obstacle par le bas.

La figure 2 est une vue schématique en coupe verticale d'un deuxième dispositif selon l'invention, permettant l'extraction de matière pulvérulente à partir d'un silo situé près d'un obstacle.

La figure 3 est une vue schématique en coupe verticale d'un troisième dispositif selon l'invention, permettant un contournement d'obstacle par le haut.

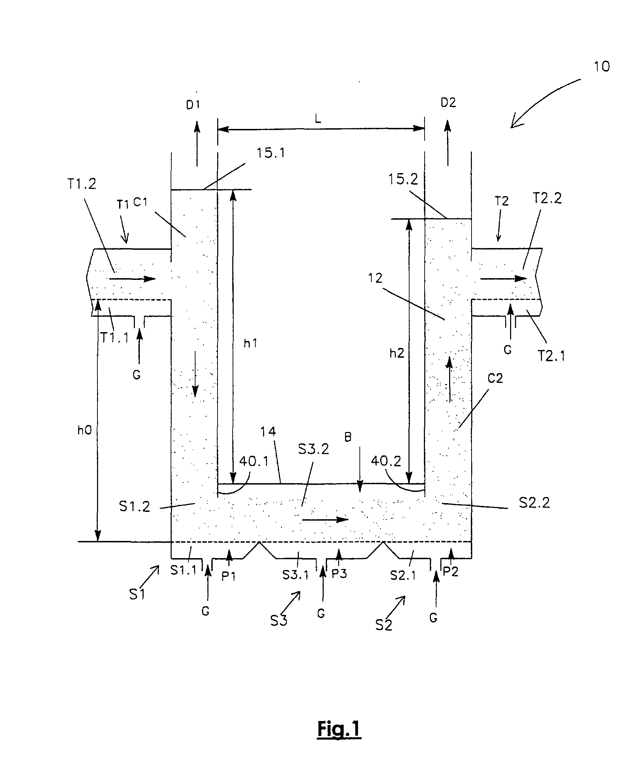

## EXEMPLE 1: Le siphon hyperdense (Figure 1)

Cet exemple est emprunté à une aluminerie qui se modernise en adoptant un système d'alimentation de l'alumine en continu, et dans laquelle, à partir d'un silo placé au-dessus du niveau des cuves, il est nécessaire de faire passer le convoyeur d'alumine sous le plancher des cuves afin de laisser le passage aux véhicules de service électrolyse (transport de bain liquide, de métal...)

Le dispositif de contournement est conçu et réalisé en suivant les caractéristiques du procédé selon l'invention. Dans ce cas particulier, le contournement s'effectue par le bas. Bien que le milieu en circulation concerné (alumine + gaz) soit ici compressible et que la notion de siphon soit associée exclusivement aux écoulements hydrodynamiques, on ne peut s'empêcher de faire une analogie entre le dispositif de cet exemple, illustré en figure 1, et un siphon hydraulique, tant sur le plan de sa forme que sur celui de la fonction qu'il remplit. C'est la raison pour laquelle la demanderesse l'a appelé "siphon hyperdense".

La demanderesse a en effet constaté qu'avec un tel dispositif, il n'y a pas création de bouchon solide: le produit est maintenu en tout point en état de fluidisation ou de fluidisation potentielle et la libre circulation du produit est assurée malgré le passage par un point bas.

Ledit siphon hyperdense comporte trois caissons de fluidisation potentielle distincts:

- à l'entrée, un caisson **S1** comportant un canal inférieur **S1.1** alimenté en gaz à la pression **P1** et un "canal" supérieur **S1.2**, constitué essentiellement d'une colonne **C1**, reliée d'un côté au canal supérieur **T1.2** du convoyeur amont **T1** et de l'autre côté au canal supérieur **S3.2** du caisson intermédiaire **S3;**
- au milieu, à un niveau permettant de franchir l'obstacle, un caisson intermédiaire **S3** comparable à une aérocanalisation horizontale, dont le canal inférieur **S3.1** est alimenté en gaz à la pression P3 et dont le canal supérieur **S3.2,** relié par sa première extrémité au canal supérieur **S1.2** du caisson amont **S1**, est relié par sa deuxième extrémité au canal supérieur **S2.2** du caisson aval **S2;**
- à la sortie du dispositif, un caisson aval **S2** comportant un canal inférieur **S2.1** alimenté en gaz à la pression P2 et un "canal" supérieur **S2.2**, constitué essentiellement d'une colonne **C2**, reliée d'un côté au canal supérieur **S3.2** du caisson intermédiaire **S3** et de l'autre côté au canal supérieur **T2.2** du convoyeur aval **T2**.

Les convoyeurs horizontaux **T1** et **T2** sont ici au même niveau, mais rien n'interdit une différence de hauteur entre le convoyeur amont et le convoyeur aval.

La longueur L du caisson intermédiaire, égale à 20 mètres, est ici suffisante pour faire franchir l'obstacle au matériau pulvérulent à convoyer. Dans les cas où une longueur L supérieure est nécessaire, il est préférable de relier le caisson **S3** avec d'autres caissons intermédaires S'3, S''3, etc.. , identiques à **S3**, de telle sorte qu'ils aient un canal supérieur commun et des canaux inférieurs alimentés en gaz sous une pression de fluidisation potentielle P'3, P''3, etc...

La colonne **C1** (resp. **C2**) est remplie d'alumine sur une hauteur **h1** (resp. **h2**) telle que le niveau libre dudit matériau **15.1** (resp. 15.2) se trouve au dessus du point le plus haut des aérocanalisations **T1, T2** et **S3.** La différence de pression $\Delta P = P1 - P2$ toujours positive est assurée quand la hauteur du matériau pulvérulent **h1** est maintenue supérieure à **h2.**

Le caisson intermédiaire **S3** est situé à un niveau plus bas que celui des deux convoyeurs horizontaux **T1** et **T2:** la distance **h0** est voisine de 6 mètres. Afin de laisser le passage libre aux véhicules de service de l'électrolyse, il a donc été nécessaire, en raison de l'implantation des cuves, de faire passer l'alumine 6 mètres en dessous du niveau du convoyeur principal, sur une distance de 20 mètres, et de la faire remonter ensuite de 6 mètres environ.

Le réglage des pressions P1 et P2 est tel que le système reste plein d'alumine à tout moment. Les pressions P1 et P2 sont telles que

$$P1 = h1*d1 \qquad et \qquad P2 = h2*d2,$$

où d1 est la masse volumique moyenne du produit en fluidisation potentielle dans la colonne C1 et d2 est la masse volumique moyenne du produit en fluidisation potentielle dans la colonne C2. La densité du produit fluidisé varie en effet d'une colonne à l'autre: elle est d'autant plus faible que la pression de fluidisation est élevée.

La demanderesse a constaté en fait qu'il suffisait de s'assurer que la hauteur **h1** soit supérieure à la hauteur **h2,** pour que la pression P1 soit supérieure à P2 et qu'ainsi le dispositif fonctionne comme un siphon hydraulique: il y a écoulement naturel de l'alumine malgré le point bas imposé par la géométrie du dispositif.

Les pressions sont choisies aux valeurs suivantes :

P1=0.7 bar, P2=0.6 bar et P3=0.65 bar

On s'aperçoit alors que le niveau **h1** du produit de densité moyenne de 0.85 est proche de 8,2 mètres, tandis que **h2** est proche de 7 mètres, et le produit s'écoule naturellement par le siphon hyperdense, en descendant par la colonne **C1**, en suivant le caisson **S3** et en remontant par la colonne **C2**.

Pour que ce système fonctionne correctement, on a ménagé une bulle **B** de gaz à la partie supérieure du caisson intermédiaire **S3**. Cette bulle de gaz est obtenue de façon classique par la pénétration des colonnes **C1** et **C2** dans la partie supérieure du caisson intermédiaire **S3**.

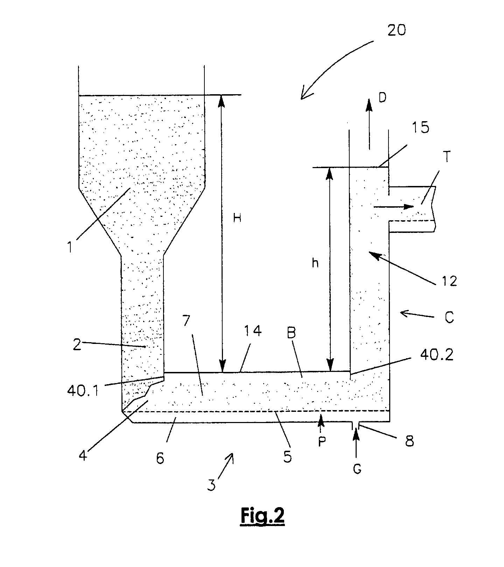

**EXEMPLE 2: Extraction à la base du silo (Figure 2)**

Une autre application du siphon en phase hyperdense est l'extraction de produit pulvérulent à la base d'un silo.

Il arrive en effet que le silo soit implanté très près du sol. Il est alors nécessaire d'élever le produit après son extraction, pour utilisation ultérieure à un niveau plus élevé que celui de la base du silo, par exemple pour alimenter un autre équipement de transport sans avoir à créer une fosse de reprise du produit à transporter.

La figure 2 indique le schéma d'un tel dispositif. Le silo **1** alimente le siphon constitué de la base **2** du silo **1**, du convoyeur intermédiaire **3** et de la colonne **C**. Le siphon alimente lui-même un convoyeur horizontal **T** ou un autre système de manutention ou de stockage.

Le convoyeur intermédiaire **3** est composé d'un canal inférieur **6** et d'un canal supérieur **7**, relié à une extrémité à la colonne **C** et à l'autre extrémité au silo **1** par une zone **4** en partie basse de la base **2** du silo **1**. Par une tubulure **8**, on injecte un gaz **G** sous une pression **P**. Ce gaz passe par la paroi poreuse **5** qui sépare la canal inférieur **6** et le canal supérieur **7**.

Dans cette configuration, le silo **1** est un réservoir de stockage aérien: il n'est pas fluidisé. Il est nécessaire que la hauteur **H** représentant la charge d'alumine dans le silo **1** soit supérieure à la hauteur **h** d'élévation du produit **12**. La partie inférieure **4** de la base **2** du silo **1** est alors mise en condition de fluidisation potentielle, ce qui permet le bon écoulement du matériau pulvérulent **12** au travers du siphon constitué par la base **2** du silo **1**, le convoyeur intermédiaire **3** et la colonne **C**.

Pour que le système fonctionne correctement, il est avantageux de ménager dans la partie sommitale **14** du canal supérieur **7** du caisson intermédiaire **3** un espace libre de matériau pulvérulent, constituant une bulle de gaz **B** sous pression. Pour créer une bulle **B** stable, il a suffi de prolonger la colonne **C** (resp. la base **2** du silo **1**) par une pénétration **40.1** (resp. **40.2**).

Dans cet exemple, la pression P de fluidisation est telle que P=d*h, d étant la masse volumique moyenne du solide en état de fluidisation.

Il a été montré expérimentalement que, pour l'alumine, il était parfaitement possible de faire remonter le produit d'une hauteur h égale à 7 m en imposant une pression d'air P de l'ordre de 0.6 bar.

Bien entendu, ces valeurs ne sont pas limitatives, il suffit d'augmenter la pression P pour faire remonter le produit à la hauteur désirée.

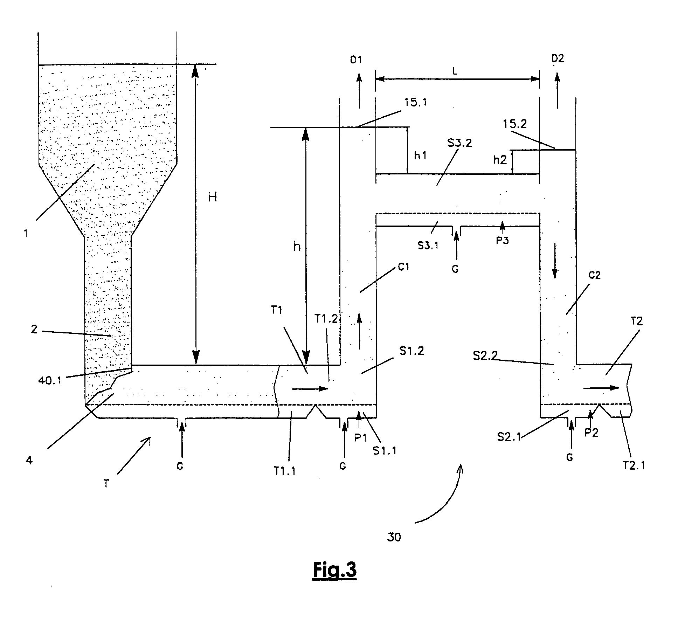

**EXEMPLE 3: Contournement par le haut (Figure 3)**

La figure 3 illustre un dispositif permettant un contournement d'obstacle par le haut. Les différentes parties du dispositif sont marquées par les mêmes références que celles utilisées dans l'exemple de la figure 1 et celui de la figure 2.

Un tel dispositif ne peut fonctionner de manière isolée. Il est relié au réservoir de stockage aérien grâce à un ensemble d'aérocanalisations, symbolisé sur la figure 3 par l'aérocanalisation **T**. Comme dans l'exemple 2, le niveau supérieur de l'alumine dans ce réservoir de stockage aérien **1** est situé au-dessus des niveaux libres de l'alumine dans les colonnes du dispositif de contournement, en particulier de la colonne amont (la hauteur **H** d'alumine doit être supérieure à la hauteur **h** dans la colonne **C1**).

**AVANTAGES DU PROCEDE SELON L'INVENTION**

Ce procédé permet de concevoir et réaliser des siphons hyperdenses utilisés :

- pour l'alimentation des cuves d'électrolyse entre deux convoyeurs horizontaux avec passage par un niveau bas, ou encore par un niveau haut;

- ou encore à l'extraction d'un silo lorsque celui-ci est implanté près du sol.

**Revendications**

**1.** Procédé de convoyage en lit hyperdense de matériau pulvérulent permettant de franchir un obstacle, **caractérisé en ce qu'**on utilise dans le système de convoyeurs, introduit entre deux convoyeurs horizontaux, l'un amont (T1) et l'autre aval (T2), un dispositif de contournement (10; 20; 30) de l'obstacle, comportant au moins trois caissons:

- à l'entrée du dispositif, un caisson amont (S1) comportant un canal inférieur (S1.1) alimenté en gaz à la pression P1 et un canal supérieur (S1.2), constitué essentiellement d'une colonne (C1), reliée d'un côté au canal supérieur (T1.2) du convoyeur amont (T1) et de l'autre côté au canal supérieur (S3.2) du caisson intermédiaire (S3);

- au milieu, à un niveau permettant de franchir l'obstacle, au moins un caisson intermédiaire (S3), dont le canal inférieur (S3.1) est alimenté en gaz à la pression P3 et dont le canal supérieur (S3.2), relié par sa première extrémité au canal supérieur (S1.2) du caisson amont (S1), est relié par sa deuxième extrémité au canal supérieur (S2.2) du caisson aval (S2);

- à la sortie du dispositif, un caisson aval (S2) comportant un canal inférieur (S2.1) alimenté en gaz à la pression P2 et un canal supérieur (S2.2), constitué essentiellement d'une colonne (C2), reliée d'un côté au canal supérieur (S3.2) du caisson intermédiaire (S3) et de l'autre côté au canal supérieur (T2.2) du convoyeur aval (T2);

et **en ce que**, à tout moment, les trois caissons restent remplis du matériau pulvérulent maintenu en état de fluidisation potentielle, la différence de pression P1 - P2 étant maintenue strictement positive.

2. Procédé de convoyage en lit hyperdense de matériau pulvérulent selon la revendication 1, **caractérisé en ce que** la colonne (C1) du caisson amont (S1) et la colonne (C2) du caisson aval (S2) sont des colonnes d'équilibrage.

3. Procédé de convoyage en lit hyperdense de matériau pulvérulent selon la revendication 2, **caractérisé en ce que** la hauteur (h1) du matériau pulvérulent dans la colonne (C1) du caisson amont (S1) est maintenue supérieure à la hauteur (h2) du matériau pulvérulent dans la colonne (C2) du caisson aval (S2).

4. Procédé de convoyage en lit hyperdense de matériau pulvérulent selon la revendication 2 ou 3, **caractérisé en ce que** les colonnes (C1) du caisson amont et (C2) du caisson aval sont remplies de produit pulvérulent sur une hauteur (h1, h2) telle que le niveau libre (15.1, 15.2) dudit matériau dans chacune desdites colonnes (C1, C2) se trouve au dessus du point le plus haut des aérocanalisations appartenant au groupe constitué par le caisson intermédiaire (S3) et les parties des convoyeurs amont (T1) et aval (T2) situées au voisinage de leurs jonctions avec ledit dispositif de contournement (10; 20; 30).

5. Procédé de convoyage en lit hyperdense de matériau pulvérulent selon l'une quelconque des revendications 1 à 4, dans lequel les aérocanalisations relient un réservoir de stockage aérien (1) à une zone à alimenter, **caractérisé en ce que** le niveau libre du matériau pulvérulent dans ledit réservoir de stockage aérien (1) est situé au-dessus du niveau libre du matériau pulvérulent remplissant chaque colonne (C; C1; C2) dudit dispositif de coutoumement (10; 20; 30).

6. Procédé de convoyage en lit hyperdense de matériau pulvérulent selon l'une quelconque des revendications 1 à 5, **caractérisé en ce que** l'on ménage dans la partie sommitale (14) du canal supérieur (S3.2) du caisson intermédiaire (S3) un espace libre de matériau pulvérulent, constituant une bulle (B) de gaz sous pression

7. Dispositif de contournement (10, 30) permettant le convoyage en phase hyperdense d'un matériau pulvérulent et relié à un convoyeur amont (T1) et à un convoyeur aval (T2), **caractérisé en ce qu'**il comporte au moins trois caissons:

- un caisson amont (S1) comportant un canal inférieur (S1.1) alimenté en gaz à la pression P1 et un canal supérieur (S1.2), constitué essentiellement d'une colonne (C1), reliée d'un côté au canal supérieur (T1.2) du convoyeur amont (T1) et de l'autre côté au canal supérieur (S3.2) du caisson intermédiaire (S3);

- au moins un caisson intermédiaire (S3), dont le canal inférieur (S3.1) est alimenté en gaz à la pression P3 et dont le canal supérieur (S3.2), relié par sa première extrémité au canal supérieur (S1.2) du caisson amont (S1), est relié par sa deuxième extrémité au canal supérieur (S2.2) du caisson aval (S2);

- un caisson aval (S2) comportant un canal inférieur (S2.1) alimenté en gaz à la pression P2 et un canal supérieur (S2.2), constitué essentiellement d'une colonne (C2), reliée d'un côté au canal supérieur (S3.2) du caisson intermédiaire (S3) et de l'autre côté au canal supérieur (T2.2) du convoyeur aval (T2);

8. Dispositif de contournement (10) selon la revendication 7, **caractérisé en ce que** le caisson intermédiaire (S3) est situé à un niveau inférieur à celui du convoyeur amont (T1) et à celui du convoyeur aval (T2).

9. Dispositif de contournement (30) selon la revendication 7, **caractérisé en ce que** le caisson intermédiaire (S3) est situé à un niveau supérieur à celui du convoyeur amont (T1) et à celui du convoyeur aval (T2).

10. Dispositif de contournement (10, 30) selon l'une quelconque des revendications 7 à 9, **caractérisé en ce que** la colonne (C1) et la colonne (C2) sont des colonnes d'équilibrage remplies de matériau pulvérulent sur une hauteur (h1, h2) telle que le niveau libre (15.1, 15.2) dudit matériau dans chacune de ces colonnes se trouve au dessus du point le plus haut des aérocanalisations appartenant au groupe constitué par le caisson intermédiaire (S3) et les parties des convoyeurs amont (T1) et aval (T2) situées au voisinage de leurs jonctions avec ledit dispositif de contournement.

11. Dispositif de contournement (10, 30) selon l'une quelconque des revendications 7 à 10, **caractérisé en ce que** la pression P3 du caisson intermédiaire (S3) a une valeur intermédiaire entre la pression P1 de fluidisation potentielle de la première colonne (C1) et la pression P2 de fluidisation potentielle de la seconde colonne (C2).

12. Dispositif de contournement (20) permettant l'extraction d'un silo et le convoyage en phase hyperdense d'un matériau pulvérulent et relié à un silo (1) et à un convoyeur (T), **caractérisé en ce qu'**il comporte:

- un caisson (S3), situé à un niveau inférieur à celui du convoyeur aval (T), dont le canal inférieur (S3.1) est alimenté en gaz à la pression P et dont le canal supérieur (S3.2) est relié par sa première extrémité à la partie basse (4) de la base (2) du silo (1) et par sa deuxième extrémité à une colonne (C);
- ladite colonne (C), reliée d'un côté au canal supérieur (S3.2) du caisson (S3) et de l'autre côté au canal supérieur du convoyeur (T), étant remplie dudit matériau pulvérulent, en état permanent de fluidisation potentielle, sur une hauteur (h) inférieure à la hauteur de remplissage (H) du matériau dans le silo (1)

**Claims**

1. Process for conveyance of a powder material in a hyperdense bed to bypass an obstacle, **characterized in that** an obstacle bypass device (10; 20; 30) comprising at least three caissons is inserted into the system of conveyors, between two horizontal conveyors (the "upstream" conveyor (T1), and the "downstream" conveyor (T2)):

   - at the entry to the device, an upstream caisson (S1) comprising a lower duct (S1.1) supplied with gas at pressure P1 and an upper duct (S1.2) composed essentially of a column (C1) connected at one end to the upper duct (T1.2) of the upstream conveyor (T1) and at the other end to the upper duct (S3.2) in the intermediate caisson (S3);
   - in the middle, at a level that bypasses the obstacle, the lower duct (S3.1) of which is fed with gas at pressure P3 and the upper duct (S3.1) of which is connected through its first end to the upper duct (S1.2) of the upstream caisson (S1), is connected at its second end to the upper duct (S2.2) of the downstream caisson (S2);
   - at the outlet from the device, a downstream caisson (S2) comprising a lower duct (S2.1) supplied with gas at pressure P2 and an upper duct (S2.2) composed essentially of a column (C2) connected firstly to the upper duct (S3.2) of the intermediate caisson (S3) and at the other end to the upper duct (T2.2) of the downstream conveyor (T2);

   such that the three caissons remain full of powder material kept in a potential fluidization state at all times, the pressure difference P1 - P2 being kept strictly positive.

2. Process for conveyance of a powder material in a hyperdense bed according to claim 1, **characterized in that** the column (C1) of the upstream caisson (S1) and the column (C2) of the downstream caisson (S2) are balancing columns.

3. Process for conveyance of a powder material in a hyperdense bed according to claim 2, **characterized in that** the height (h1) of powder material in column (C1) in the upstream caisson (S1) is kept greater than the height (h2) of the powder material in the column (C2) in the downstream caisson (S2).

4. Process for conveyance of a powder material in a hyperdense bed according to claim 2 or 3, **characterized in that** the columns (C1) of the upstream caisson and (C2) of the downstream caisson are supplied with powder material over a height (h1, h2) such that the free level (15.1, 15.2) of the said material in each of the said columns (C1, C2) is above the highest point of the air pipes belonging to the group consisting of the intermediate caisson (S3) and the parts of the upstream conveyor (T1) and the downstream conveyor (T2) located adjacent to their junctions with the said bypass device (10; 20; 30).

5. Process for conveyance of a powder material in a hyperdense bed according to any one of claims 1 to 4, in which the air pipes connect an overhead storage tank (1) to an area to be supplied, **characterized in that** the free level of powder material in the said overhead storage tank (1) is higher than the free level of the powder material filling each column (C; C1; C2) of the said bypass device (10; 20; 30).

6. Process for conveyance of a powder material in a hyperdense bed according to any one of claims 1 to 5, **characterized in that** a space without any powder material is created in the high part (14) of the upper duct (S3.2) of the intermediate caisson (S3), forming a pressurized gas bubble (B).

7. Bypass device (10, 30) usable for conveying a powder material in a hyperdense phase and connected to an upstream conveyor (T1) and a downstream conveyor (T2), **characterized in that** it comprises at least three caissons:

   - an upstream caisson (S1) comprising a lower duct (S1.1) supplied with gas at pressure P1 and an upper duct (T1.2) composed essentially of a column (C1), connected at one end to the upper duct (T1.2) of the upstream conveyor (T1) and at the other end to the upper duct (S3.2) of the intermediate caisson (S3);
   - at least one intermediate caisson (S3), in which the lower duct (S3.1) is supplied with gas at pressure P3 and the upper duct (S3.2) connected at its first end to the upper duct (S1.2) of the upstream caisson (S1), and is connected through its second end to the upper duct (S2.2) in the downstream caisson (S2);

- a downstream caisson (S2) comprising a lower duct (S2.1) supplied with gas at pressure P2 and an upper duct (S2.2) composed essentially of a column (C2) connected at one end to the upper duct (S3.2) of the intermediate caisson (S3) and at the other end to the upper duct (T2.2) of the downstream conveyor (T2).

**8.** Bypass device (10) according to claim 7, **characterized in that** the level of the intermediate caisson (S3) is lower than the level of the upstream conveyor (T1) and the downstream conveyor (T2).

**9.** Bypass device (30) according to claim 7, **characterized in that** the level of the intermediate caisson (S3) is higher than the level of the upstream conveyor (T1) and the downstream conveyor (T2).

**10.** Bypass device (10,30) according to any one of claims 7 to 9, **characterized in that** the column (C1) and the column (C2) are balancing columns filled with powder material over a height (h1, h2) such that the free level (15.1,15.2) of the said material in each of these columns is above the highest point in the air pipes belonging to the group consisting of the intermediate caisson (S3) and the parts of the upstream conveyor (T1) and downstream conveyor (T2) located close to their junctions with the said bypass device.

**11.** Bypass device (10,30) according to any one of claims 7 to 10, **characterized in that** the pressure P3 in the intermediate caisson (S3) is intermediate between the potential fluidization pressure P1 in the first column (C1) and the potential fluidization pressure P2 of the second column (C2).

**12.** Bypass device (20) used for extraction from a silo and conveying a powder material in hyperdense phase and connected to a silo (1) and a conveyor (T), **characterized in that** it comprises:

- a caisson (S3) located at a level lower than the level of the downstream conveyor (T), the lower duct (S3.1) of which is supplied with gas at pressure P and the upper duct (S3.2) of which is connected through its first end to the lower part of the base (2) of silo (1) and by its second end to a column (C);
- a column (C) connected at one end to the upper duct (S3.2) of the caisson (S3) and at the other end to the upper duct of conveyor (T), the said column being filled with the said powder material in a permanent state of potential fluidization, over a height (h) less than the filling height (H) of the material in the silo (1).

## Patentansprüche

**1.** Förderverfahren in hochdichter Phase von Schüttgut zur Umgehung von Hindernissen, **dadurch gekennzeichnet,**
**dass** in dem Fördersystem zwischen zwei horizontalen Förderern, einem vorgeschalteten (T1) und einem nachgeschalteten (T2), eine Hindernisumgehungsvorrichtung (10; 20; 30) verwendet wird, die mindestens drei Behälter aufweist:

- am Eingang der Vorrichtung einen vorgeschalteten Behälter (81) mit einem unteren Kanal (S1.1), der mit Gas mit dem Druck P1 versorgt wird, und einem oberen Kanal (S1.2), der im wesentlichen aus einer Säule (C1) besteht, welche auf einer Seite mit dem oberen Kanal (T1.2) des vorgeschalteten Förderers (T1) und auf der anderen Seite mit dem oberen Kanal (S3.2) des Zwischenbehälters (S3) verbunden ist;
- in der Mitte, in einem Bereich zur Umgehung des Hindernisses, mindestens einen Zwischenbehälter (S3), dessen unterer Kanal (S3.1) mit Gas mit dem Druck P3 versorgt wird und dessen oberer Kanal (S3.2), welcher mit seinem ersten Ende mit dem oberen Kanal (S1.2) des vorgeschalteten Behälters (S1) verbunden ist, mit seinem zweiten Ende mit dem oberen Kanal (S2.2) des nachgeschalteten Behälters (S2) verbunden ist;
- am Ausgang der Vorrichtung einen nachgeschalteten Behälter (S2) mit einem unteren Kanal (S2.1), der mit Gas mit dem Druck P2 versorgt wird, und einem oberen Kanal (S2.2), der im wesentlichen aus einer Säule (C2) besteht, welche auf einer Seite mit dem oberen Kanal (S3.2) des Zwischenbehälters (S3) und auf der anderen Seite mit dem oberen Kanal (T2.2) des nachgeschalteten Förderers (T2) verbunden ist;

und **dass** die drei Behälter jederzeit mit im potentiellen Schwebezustand gehaltenem Schüttgut gefüllt bleiben, wobei der Druckunterschied P1 - P2 ausschließlich positiv gehalten wird.

**2.** Förderverfahren in hochdichter Phase von Schüttgut nach Anspruch 1, **dadurch gekennzeichnet, dass** die Säule (C1) des vorgeschalteten Behälters (S1) und die Säule (C2) des nachgeschalteten Behälters (S2) Ausgleichssäulen sind.

3. Förderverfahren in hochdichter Phase von Schüttgut nach Anspruch 2, **dadurch gekennzeichnet, dass** die Höhe (h1) des Schüttguts in der Säule (C1) des vorgeschalteten Behälters (S1) über der Höhe (h2) des Schüttguts in der Säule (C2) des nachgeschalteten Behälters (S2) gehalten wird.

4. Förderverfahren in hochdichter Phase von Schüttgut nach Anspruch 2 oder 3, **dadurch gekennzeichnet, dass** die Säule (C1) des vorgeschalteten Behälters und die Säule (C2) des nachgeschalteten Behälters auf einer solchen Höhe (h1, h2) mit Schüttgut gefüllt sind, dass sich das freie Niveau (15.1, 15.2) des Materials in jeder der Säulen (C1, C2) über dem höchsten Punkt der Luftleitungen befindet, die zu der aus dem Zwischenbehälter (S3) und den Teilen des vorgeschalteten (T1) und nachgeschalteten Förderers (T2), die in der Nähe ihrer Verbindungen mit der Umgehungsvorrichtung (10; 20; 30) liegen, bestehenden Gruppe gehören.

5. Förderverfahren in hochdichter Phase von Schüttgut nach einem der Ansprüche 1 bis 4, bei dem die Luftleitungen einen oberirdischen Vorratsbehälter (1) mit einem zu versorgenden Bereich verbinden, **dadurch gekennzeichnet, dass** das freie Niveau des Schüttguts in dem oberirdischen Vorratsbehälter (1) oberhalb des freien Niveaus des Schüttguts liegt, mit dem jede Säule (C; C1; C2) der Umgehungsvorrichtung (10; 20; 30) gefüllt ist.

6. Förderverfahren in hochdichter Phase von Schüttgut nach einem der Ansprüche 1 bis 5, **dadurch gekennzeichnet, dass** im obersten Bereich (14) des oberen Kanals (S3.2) des Zwischenbehälters (S3) ein schüttgutfreier Raum vorgesehen wird, der eine Blase (B) mit druckbeaufschlagtem Gas bildet.

7. Umgehungsvorrichtung (10, 30) zur Förderung in hochdichter Phase von Schüttgut, welche mit einem vorgeschalteten Förderer (T1) und einem nachgeschalteten Förderer (T2) verbunden ist, **dadurch gekennzeichnet, dass** sie mindestens drei Behälter aufweist:

   - einen vorgeschalteten Behälter (S1) mit einem unteren Kanal (S1.1), der mit Gas mit dem Druck P1 versorgt wird, und einem oberen Kanal (S1.2), der im wesentlichen aus einer Säule (C1) besteht, welche auf einer Seite mit dem oberen Kanal (T1.2) des vorgeschalteten Förderers (T1) und auf der anderen Seite mit dem oberen Kanal (S3.2) des Zwischenbehälters (S3) verbunden ist; .
   - mindestens einen Zwischenbehälter (S3), dessen unterer Kanal (S3.1) mit Gas mit dem Druck P3 versorgt wird und dessen oberer Kanal (S3.2), welcher mit seinem ersten Ende mit dem oberen Kanal (S1.2) des vorgeschalteten Behälters (S1) verbunden ist, mit seinem zweiten Ende mit dem oberen Kanal (S2.2) des nachgeschalteten Behälters (S2) verbunden ist;
   - einen nachgeschalteten Behälter (S2) mit einem unteren Kanal (S2.1), der mit Gas mit dem Druck P2 versorgt wird, und einem oberen Kanal (S2.2), der im wesentlichen aus einer Säule (C2) besteht, welche auf einer Seite mit dem oberen Kanal (S3.2) des Zwischenbehälters (S3) und auf der anderen Seite mit dem oberen Kanal (T2.2) des nachgeschalteten Förderers (T2) verbunden ist.

8. Umgehungsvorrichtung (10) nach Anspruch 7, **dadurch gekennzeichnet, dass** der Zwischenbehälter (S3) tiefer liegt als der vorgeschaltete Förderer (T1) und der nachgeschaltete Förderer (T2).

9. Umgehungsvorrichtung (30) nach Anspruch 7, **dadurch gekennzeichnet, dass** der Zwischenbehälter (S3) höher liegt als der vorgeschaltete Förderer (T1) und der nachgeschaltete Förderer (T2).

10. Umgehungsvorrichtung (10, 30) nach einem der Ansprüche 7 bis 9, **dadurch gekennzeichnet, dass** die Säule (C1) und die Säule (C2) Ausgleichssäulen sind, die auf einer solchen Höhe (h1, h2) mit Schüttgut gefüllt sind, dass sich das freie Niveau (15.1, 15.2) des Materials in jeder dieser Säulen über dem höchsten Punkt der Luftleitungen befindet, die zu der aus dem Zwischenbehälter (S3) und den Teilen des vorgeschalteten (T1) und nachgeschalteten Förderers (T2), welche in der Nähe ihrer Verbindungen mit der Umgehungsvorrichtung (10; 20; 30) liegen, bestehenden Gruppe gehört.

11. Umgehungsvorrichtung (10, 30) nach einem der Ansprüche 7 bis 10, **dadurch gekennzeichnet, dass** der Druck P3 des Zwischenbehälters (S3) einen Zwischenwert hat, der zwischen dem Druck P1 für den potentiellen Schwebezustand der ersten Säule (C1) und dem Druck P2 für den potentiellen Schwebezustand der zweiten Säule (C2) liegt.

12. Umgehungsvorrichtung (20) zum Siloaustrag und zur Förderung in hochdichter Phase von Schüttgut, welche mit einem Silo (1) und einem Förderer (T) verbunden ist, **dadurch gekennzeichnet, dass** sie aufweist:

   - einen Behälter (S3), der tiefer liegt als der nachgeschaltete Förderer (T) und dessen unterer Kanal (S3.1) mit Gas mit dem Druck P versorgt wird und dessen oberer Kanal (S3.2) mit seinem ersten Ende mit dem unteren Teil (4) der Basis (2) des Silos (1) und mit seinem zweiten Ende mit einer Säule (C) verbunden ist;

- wobei die Säule (C), die auf einer Seite mit dem oberen Kanal (S3.2) des Behälters (S3) und auf der anderen Seite mit dem oberen Kanal des Förderers (T) verbunden ist, mit dem permanent im potentiellen Schwebezustand gehaltenen Schüttgut auf einer Höhe (h) gefüllt ist, die geringer ist als die Füllhöhe (H) des Materials im Silo (1).

**Fig.1**

**Fig.2**

**Fig.3**